Europäisches Patentamt

European Patent Office

Office européen des brevets

(11) Publication number: **0 434 834 B1**

# EUROPEAN PATENT SPECIFICATION

(45) Date of publication of patent specification: **23.02.94**

(51) Int. Cl.⁵: **F16F 1/36**, **A43B 13/38**, **A47C 27/14**

(21) Application number: **88904638.9**

(22) Date of filing: **25.05.88**

(86) International application number:
**PCT/JP88/00503**

(87) International publication number:
**WO 88/09448 (01.12.88 88/26)**

(54) **SHOCK ABSORBING STRUCTURE.**

(30) Priority: **28.05.87 JP 133114/87**
**08.07.87 JP 104797/87 U**

(43) Date of publication of application:
**03.07.91 Bulletin 91/27**

(45) Publication of the grant of the patent:
**23.02.94 Bulletin 94/08**

(84) Designated Contracting States:
**DE FR GB IT**

(56) References cited:
| | |
|---|---|
| **EP-A- 0 149 910** | **WO-A-81/01234** |
| **CA-A- 1 176 458** | **GB-A- 2 032 761** |
| **GB-A- 2 084 694** | **GB-A- 2 087 902** |
| **JP-A- 5 264 352** | **JP-U- 4 824 645** |
| **JP-U- 5 464 010** | **JP-U- 6 240 904** |
| **JP-U-54 164 012** | **JP-U-60 178 401** |
| **JP-Y- 5 254 520** | |

**JIS (Japanese Industrial Standard) K
6301-1975; pages 10-12**

(73) Proprietor: **SUMITOMO RUBBER INDUSTRIES,
LTD.
No. 1-1, Tsutsui-cho 1-chome
Chuo-ku Kobe-shi Hyogo-ken(JP)**

(72) Inventor: **SASAKI, Teruo
12-58-324, Noto-cho
Nishinomiya-shi Hyogo-ken(JP)**
Inventor: **FUKUDA, Masahide
3-15-1-805, Suganodai, Suma-ku
Kobe-shi Hyogo-ken(JP)**

(74) Representative: **Allard, Susan Joyce et al
BOULT, WADE & TENNANT
27 Furnival Street
London EC4A 1PO (GB)**

EP 0 434 834 B1

**Description**

[Field of the Invention]

The present invention relates to a shock absorbing structure. More particularly, it relates to a shock absorbing structure suitable for shoes in daily life; sports shoes for jogging, tennis and golf; shoes for medical usages; mattresses for beds; cushioning sheets for chairs; floor coverings; packing or wrapping materials for protecting products; and other shock absorbing materials.

[Prior Art]

Hitherto, there have been used, as shock absorbing materials for shoes, foamed sheets from ethylene-vinyl acetate copolymer (hereinafter referred to as "EVA"), natural rubber, synthetic rubber and polyurethane; resin structures constructed like a branched tree as disclosed in Japanese Kokoku Publication (examined) 43224/1972 (GB-A-1321826); polyurethane solid elastomers having a high shock-damping capacity; and bags filled with viscous materials or gas. These materials, however, have defects in absorbing shock which occurs when the foot reaches the ground, supporting the body or receiving impact force at the time of striking the ground with the foot without restricting motion of the body in walking and exercising.

It is ideally required that the shock absorbing material absorbs the impact force which occurs in walking or exercising. It is also required against back and forth motions or right and left motions which occur in exercising that the material firmly fixes the foot on the ground and prevents the right and left motions as far as possible, and that the material simultaneously produces a reacting force for next motion, It is further required that the shock absorbing material protects the ankle. These requirements are contrary to each other. For example, if a soft material is employed as the shock absorbing material, it often twists the ankle and may often injure it. Accordingly, the conventional shock absorbing materials are poor in durability, cushioning characteristics, producibility of reaction force, protection of an ankle and a combination thereof.

For example, in view of durability, the EVA foam and the tree-like resin structure are too high in change rate in comparison with the other materials, such as, synthetic rubber, natural rubber, polyurethane, synthetic rubber foams and the polyurethane rubber foams (see Table 3). They are also poor in appearance after a compression test. These results indicate that the EVA foam and the tree-like resin structure reach a permanent compression set at an early stage and are poor in durability. Thus, they are not suitable for long time usage. The polyurethane foam and the synthetic rubber foam have a small change rate in comparison with the EVA foam and have good durability. They, however, are not good in changing rate in comparison with non-foamed materials and poor in appearance. They, therefore, are not adequate in view of durability.

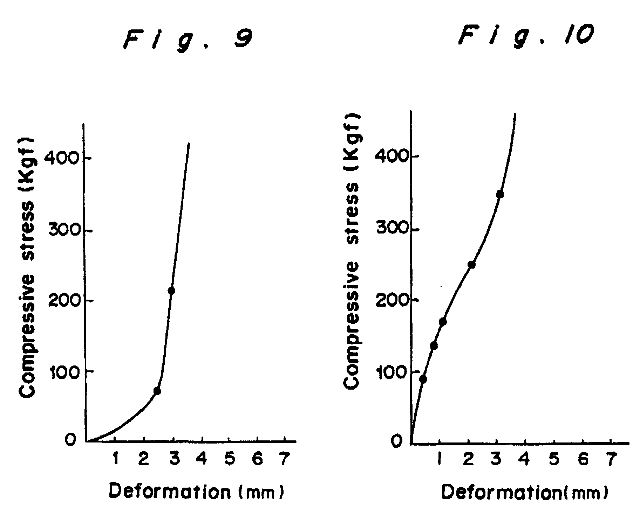

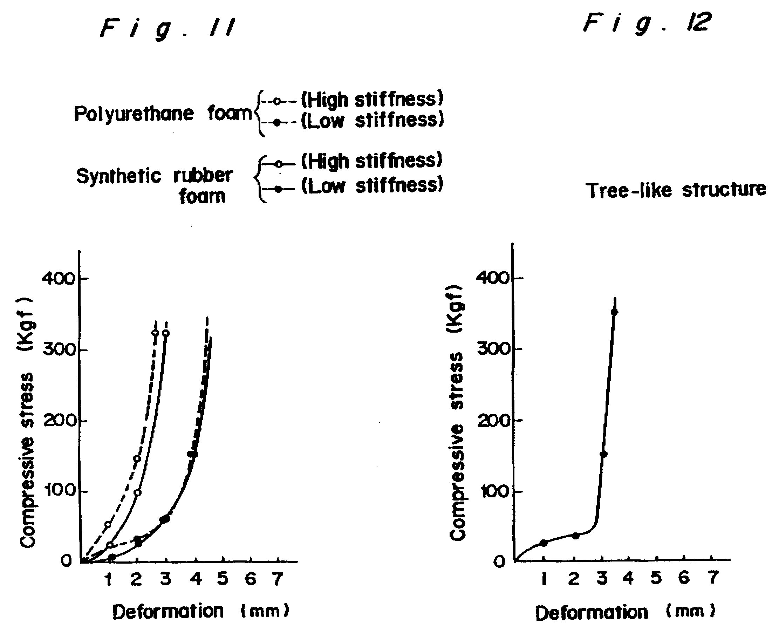

In view of shock absorbing properties, the EVA foam, as shown in Fig.10, has a high stiffness at an initial (light) weight load, but has a smaller stiffness at a heavy weight load. Thus, the foam exhibits good shock absorbing properties in heavy load conditions, e.g. in running, but poor in light load conditions, e.g. in walking. The polyurethane and synthetic rubber foams show shock absorbing properties as shown in Fig.11. If the foams have a high stiffness, the degree of deformation at an initial (light) weight load is very small to result in low shock absorbing properties in walking. In order to enhance shock absorbing properties, if the foams having a low stiffness are employed, then their deformation degrees are inherently too large to protect the ankle in running. The tree-like resin structure, as shown in Fig.12, is low in initial stiffness and high in stiffness at a heavy weight load due to its structure. Thus, this structure is preferred, because the shock absorbing properties are good in walking and the deformation degree is small in a heavy weight load condition, such as in running. The structure, however, has defects that the foot is not fixed and moves in a shoe in which the foot is put, in such sports as need an accelerated speed, i.e. track events and tennis. It is also necessary that the structure be made from a hard resin, in order to fully enjoy its technical effects. Shoes thus made, however, have bad feeling when the foot is put in. When the tree-like structure is incorporated in the shoes, flashes occurred from cut portions have to be taken off and the obtained structure also has to be covered with cloth. Accordingly, this structure has some difficulties in producibility.

The polyurethane solid elastomers having a high shock-damping capacity and the bags filled with viscous fluid have excellent shock absorbing properties, but are short of reaction forces necessary for next motion and insufficient to protect the ankles. The bags filled with gas have a defect that the gas gradually leaks out for a long time.

In order to resolve the above mentioned defects, it is also proposed to combine two or more materials mentioned above. The combination makes the toe and a heel of a shoe thick, which makes it heavy. The process for preparing the shoes is also complicated.

As discussed above, the conventional shock absorbing materials have the following defects: (1) Durability is poor. (2) Each one of the materials does not have fully satisfactory shock absorbing properties. For example, the material has proper shock absorbing ability even in a light weight load in walking and, if in a heavy weight load in running, it has on increased stiffness and a little deformation degree. Further, reaction forces necessary for next motions is produced and twist of the ankle does not occur. (3) In case where two or more of the materials are combined to obtain desirable properties, weight and thickness increases and its production process becomes complicated. It often has a defect in durability.

GB-A-2087902 describes a shock absorbing structure as defined in the preamble of claim 1. This structure is made of a rubber material having a hardness of from 30° as measured with an A-type tester to 15° as measured with an F-type rubber hardness tester, and being composed of a base and a plurality of ridges or projections spaced apart on the base.

The present invention provides a shock absorbing structure made of an elastic material consisting of a rubber composition comprising a rubber component and additives and being composed of a base (1,11) and a plurality of projections (2,12) spaced apart on said base (1,11),
characterized in that
the elastic material has a hardness in a range of 5 to 60 according to JIS-A type hardness meter,
the plurality of projections (2,12) are spaced apart in parallel on said base (1,11),
the distance (C,C') between the centres of a row of projections (2,12) and an adjacent row of projections is larger than twice the thickness (B,B') of the projections (2,12),
the projections (2,12) have at least one protrusion (3,13) thereon which is smaller in plane area than that of the upper surface of the projections (2,12),
the base (1,11) has hollows (4,14) having substantially the same shape and the same spacing as the protrusions (3,13), the height of the protrusions (3,13) is substantially the same as the thickness of said base (1,12),
the hollows (4,14) are spaced apart in the same intervals as the protrusions and each of the hollows (4,14) is located between two adjacent projections (2,12).

The shock absorbing structure of the present invention has excellent durability, since it is made of a elastic material having a low hardness of 5 to 60 according to the JIS-A type hardness meter and a low permanent compressive set. The structure is less in permanent set in fatigue than conventional foamed sheets and resin structures and lighter than the solid elastomer and the bags filled with viscous fluid.

According to an embodiment of the invention, the structure has projections spaced apart in parallel on the base which are made of the elastic material, the projections are bent down by a certain weight load, which exhibits a shock absorbing ability. It therefore absorbs a large amount of energy and simultaneously produces the reaction forces necessary for the next motion. This structure employed as the inner sole of a shoe also prevents twisting of the ankle. Accordingly, at a light weight load, the projections are bent down and absorb the energy. At a heavy weight load, they are completely turned down to form a construction as if it were a solid rubber body, which supports the heavy weight load. The bent projections provide reaction force necessary for the next motion and fix the ankle to prevent twisting of the ankle. If two structures are superposed upon each other so as to face their projections with each structure, the superposed structure can endure a larger weight load.

The projections spaced apart in the base may be in the form of ridges or columns.

The present invention is illustrated based on drawings. It is convenient to separately explain the ridges (first embodiment) and the columns (second embodiment) of the present invention.

[Brief Explanation of the Drawings]

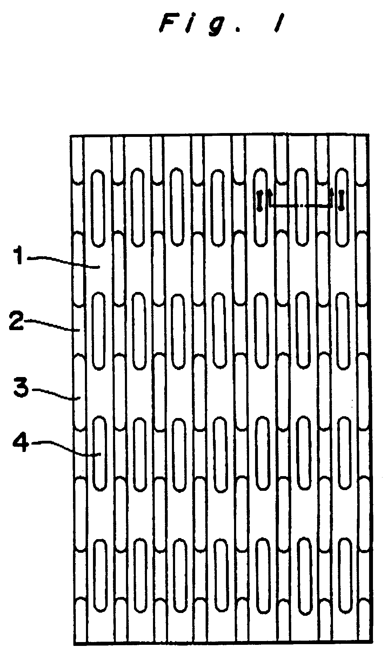

Fig. 1 is a partial plane view which shows the first embodiment of the shock absorbing structure of the present invention.

Fig.2 is a partial sectional view which shows two shock absorbing structures of the first embodiment superposed upon each other so that the ridges in the base of one structure face the ridges of the other structure and alternately engage the ridges of the other structure.

Fig.3 is a partial magnified sectional view along line I-I of Fig.1.

Fig.4 is a partial plane view which shows the second embodiment of the shock absorbing structure of the present invention.

Fig.5 is a partial sectional view which shows two shock absorbing structures of the second embodiment superposed upon each other so that the columns in the base of one structure face and alternately engage columns of the other structure.

Fig.6 is a partial magnified sectional view of II-II line in Fig.4.

3

Fig.7 records tanδ measurement at various temperatures for a rubber composition of Example 1 and various comparative compositions.

Fig.8 records the temperature at various intervals of time inside sports shoes which incorporate inner soles made from the rubber composition of Example 1.

Figs.9 to 12 record the composition test results for the first embodiment of the invention (Fig.9) and for various prior art structures (Figs.10 to 12).

Fig.13 records the compression test results for the sheets of the embodiment of Fig.9 superposed over one another.

Fig.14 records the compression test results for the embodiment of Fig.13 with another superposed structure in which the direction of the ridges of the first layer crosses that of the second layer.

Fig.15 records the compression test results for the structure of Fig.13 with another superposed structure in which the direction of the ridges of the first layer are parallel to that of the second layer.

Fig.16 shows a relation of compression stress and deformation when a load is applied to a structure as shown in Fig.4.

## The first embodiment

The first embodiment of the shock absorbing structure of the present invention is composed of a base 1 and a plurality of ridges 2 spaced apart in parallel on the base 1. The structure is formed from an elastic material having a hardness of 15 to 50 according to a JIS-A type hardness meter.

The elastic material employed in the present invention can be prepared from a rubber composition comprising a rubber component and additives. Typical examples the rubber components are polyerethane elastomer, polynorbornene, silicone elastomer, isobutylene-isoprene rubber, nitrile-butadiene rubber, styrene-butadiene rubber, natural rubber, a mixture thereof with high-styrene resin and silicone rubber. The material can be used alone or in combination. The most preferred is polynorbornene.

The rubber composition generally contains additives to control hardness. Examples of the additives are reinforcing agents, such as carbon, zinc oxide, calcium carbonate, magnesium carbonate, clay, phenol resins and coumarone indene resins; softening agents, such as higher fatty acid, fatty oil and paraffin oil; plasticizers, such as di(2-ethylhexylphosphate)(DOP), dibutylphopshate (DBP), and tricresyl phosphate (TCP), vulcanizing agents such as sulfur, inorganic or organic sulfur containing materials, organic peroxides for silicone rubber, peroxides for fluorine rubber, polyamines, isocyanates etc.; and vulcanization accelerators, such as aldehyde-ammonia compounds, aldehyde-amine compounds, guanidines, thiazoles, thiurams, dithiocarbamates etc.

The additives are present in the rubber composition in an amount sufficient to obtain the desired properties of the present invention. The amount can be varied according to the type of the rubber component and the type of the additives.

The elastic material to attain the purpose of the present invention has a hardness of from 5 to 60, preferably from 10 to 50, more preferably 15 to 45 according to the JIS-A type hardness meter. If the hardness is less than 5, the stiffness is poor. If the hardness is more than 60, it is too hard to obtain a suitable deformation by the weight of the body and therefore it is inadequate for the shock absorbing structure.

It is preferred that the elastic material employed in the present invention has a tangent (tan δ) of a phase difference between a displacement and a stress at a frequency (10 Hz), of at least 0.2 at a temperature of not more that 10 °C and of not more than a half of tan δ (10 °C), preferably of not more than one third at a temperature of at least 30 °C. By the term "tangent (tan δ) of a phase difference between a displacement and a stress at a frequency of 10 Hz" is meant that, when a vibration of 10 Hz is applied to the elastic material, a phase difference, i.e. an angle difference δ between a sine curve indicating a displacement of the elastic material and a sine curve of a stress against the displacement is expressed by tangent. At a low temperature, the human body is still stiff and poor in shock absorbing ability at the feet and the waist. It, therefore, is desired that a sole of shoes has high shock absorbing properties at a low temperature, i.e. a large tan δ. The tan δ is preferably at least 0.2, more preferably from 0.4 to 1.0 at a temperature of 10 °C. Values of less than 0.2 reduce shock absorbing properties to result in a burden on the leg and the waist. If the human body heat rises, the shock absorbing ability of the body is enhanced and the shock absorbing properties of the shoes are not alway necessary. It is rather preferred that the kinetic energy of the leg is directly transmitted to the ground without loss. Thus, it is preferred that tan δ of 30 °C is not more than a half of tan δ of 10 °C, preferably from 1/3 to 1/4 of ton δ of 10 °C. Values of more than a half of tan δ of 10 °C do not exhibit the technical effects of the present invention.

4

The ridges in the structure of the first embodiment of the present invention can be bent down at a certain weight load and absorb shock. The critical weight load at which the ridges are bent down is varied depending upon the hardness of the material and the ridge's dimension. Over the critical weight load, the structure functions as if it was solid rubber which supports heavier weight loads by little deformation.

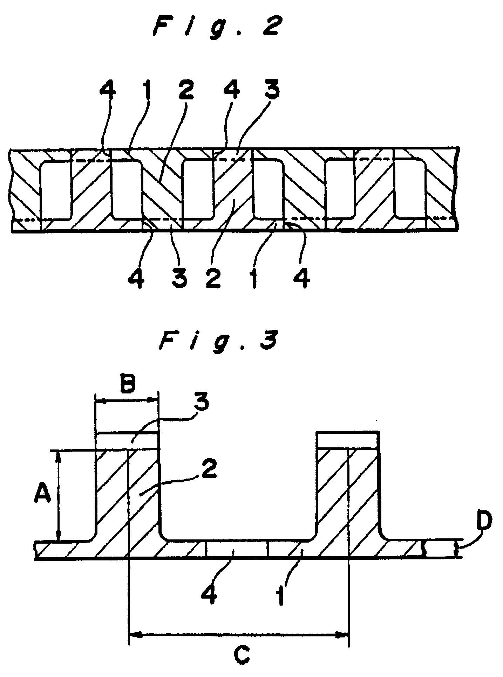

Assuming that, as shown in Fig.3, the ridges 2 have A in height, B in width of the ridge, C in the distance between centers of one ridge and an adjacent one and D in thickness of the base sheet, it is preferred that the height A is larger than the width B and the distance C is more than twice as large as the width B. When the height A is larger than the width B, the ridges 2 bend with ease. When the distance C is more than twice as large as the thickness B, the two sheets having the ridges can be easily superposed.

As is shown in Fig.2, the two structures are superposed over each other so that the ridges of the one structure face the ridges of the other structure. For this superposed structure, there are protrusions 3 spaced apart at constant intervals on the top of the ridges 2, and the base 1 has hollows 4 to be joined to the protrusions 3. The hollows are spaced apart at the same intervals as the protrusions. It is also preferred that the height of the protrusions substantially equals the base thickness D. When they are superposed, the two structures faced each other and are combined so that the protrusions 3 of one structure are joined with the hollows 4 of the other structure. The superposed structure has smooth surfaces on the up and down sides. When the structures are incorporated as an inner sole into shoes, the smooth surface makes the adhession between the inner sole and the other elements placed thereon more fixed, so that the shock absorbing properties are enhanced.

The superposed structure as shown in Fig.2 may be further superposed on another superposed structure to form a multilayer structure. In the multilayer structure, the direction of the ridges of each layer may be either in one direction or in alternate cross direction. Both stuctures are different in physical properties as mentioned in the Examples.

The second embodiment

The second embodiment of the present invention is a structure composed of a base 11 and a plurality of projections 12 spaced apart in parallel on the base 11. The structure is made from the same elastic material as the first embodiment.

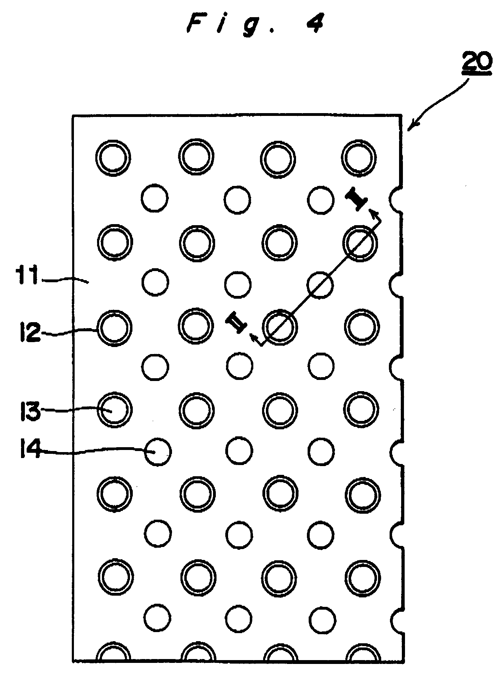

In Fig.4, the projections have a column shape, but other shapes, such as prismatic, ellipsoid, conic, pyramidal truncated cone, truncated pyramidal etc. can be employed. The projections 12 are bent down at a light weight load to absorb shock. A critical weight load at which the projections 12 are bent down is defined and varied by the dimension of the projections and the hardness of the elastic material. Over the critical weight load, the structure functions as if it was solid rubber which supports a heavier weight load by a small dimensional deformation. The structure also produces the force necessary for the next motion and fixes the ankle to prevent it from twisting.

In order to exhibit the shock absorbing properties, where the projections 12 are columns, it is preferred that the height of the projections 12 are at least 1.5 times larger than their diameter. When the projections 12 are prismatic, it is preferred that the height of them is at least 1.5 times larger than a shorter side of the base face. If the height of the projetions 12 is less than the above value, the projections 12 are so difficult to bend that the shock absorbing properties deteriorate at a low load. Although the diameter of the projections 12 are varied by the hardness of the elastic material, their dimensions and a distance between two projections, it is generally 1 to 20 mm and selected in view of desired shock absorbing properties.

The distance between two projections is also varied depending upon the hardness of the elastic material, the shape and dimension of the projections, but preferably the distance between the centers of a projection and an adjacent projection is 1.5 to 4 times, more preferably 2 to 3 times larger than the diameter of the projections 12.

As is shown in Fig.5, the two structures are superposed upon each other so that the projections faced each other. For this superposed structure, there are protrusions 13 on the top of the projections 12 and the base 1 has hollows 14 to be joined to the protrusions 13. The hollows 14 are spaced apart at the same intervals as the protrusions. It is also preferred that the height of the protrusions substantially equals the thickness and a plane sectional area of the hollow 14 is a little smaller than the surface area of the protrusion 13. When they are superposed, two structures face each other and are combined so that the protrusions 13 of the one structure are joined to the hollows 14 of the other structure. The superposed structure forms smooth surfaces on the up and down sides. When the structure is incorporated as an inner sole into shoes, the smooth surface makes the adhesion between the inner sole and the other elements placed thereon more fixed, so that shock absorbing properties are enhanced. The dimensions of the protrusions 13 and the hollows 14 are not specifically limited. The distance between the projections may be approximately the same and the distance between the protrusions 13 and the hollows 14 may also be approximately the same. The shapes and dimensions of the projections, protrusions and hollows can also be approximately the same.

The superposed structure as shown in Fig.5 may be further superposed on another superposed structure to form a multilayer structure.

(Examples]

The present invention is illustrated by the following Examples.

Example A

Rubber compositions were prepared from ingredients shown in Table 1 in which all numbers except hardness are in parts by weight.

Table 1

| Ingredients | Examples | Comparative Examples |
|---|---|---|
| Norsolex[1] | 100 | 100 |
| Highsole[2] | 150 | 130 |
| DOP(plasticizer) | 30 | 50 |
| Nippol 2007J[3] | - | 20 |
| Zinc oxide | 5 | 5 |
| Stearic acid | 1 | 1 |
| Asahi Thermal[4] | 15 | 15 |
| Sulfur | 1.5 | 1.5 |
| Noriseler TT[5] | 1 | 1 |
| Noriseler TBT-N[6] | 1.5 | 1.5 |
| Noriseler TTT-E[7] | 0.5 | 0.5 |
| Noriseler M[8] | 1 | 1 |
| Hardness | 30 | 40 |

[1] Polynorbornene available from Nippon Zeon Co., Ltd.
[2] Aromatic softener available from Nippon Petrochemicals Co. Ltd.
[3] High styrene resin available from Nippon Zeon Co. Ltd.
[4] FT carbon available from Asahi Carbon Company.
[5, 6, 7] and [8] Vulcanization accelerator available from Ouchi Shinko Chemical Industries Company.

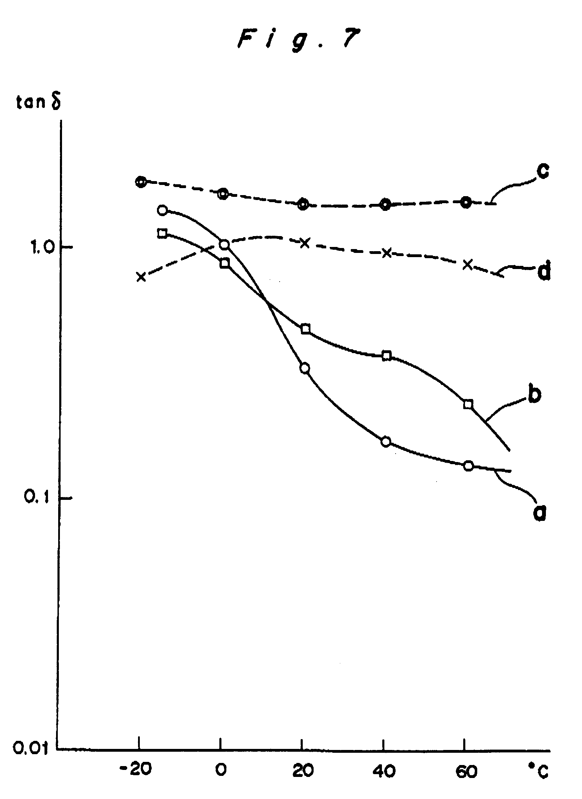

The rubber composition of Example of Table 1 was formed into 1.2 X 4.0 X 45 mm and vulcanized at 165 °C for 5 hours to obtain a test piece. The piece was subjected to a measurement of tan $\delta$ at length 30 mm, amplitude 0.5 %, initial deformation 3mm, heating rate 1 °C/min and frequency 10 Hz by using VISCOELASTIC SPECTROMETER TYPE VES-F3 available from Iwamoto Manufacturing Company. The same test was conducted on test pieces prepared from the rubber composition of Comparative Example, Silicongen and Sorbosein which are known as a shock absorbing material of sports shoes and available from Sanshin Kosan Company. The obtained results are shown in Fig.7. Fig.7 uses logarithm scale in which (a) shows Example of the present invention, (b) shows comparative Example, (c) shows Silicongel and (d) in Sorbosein.

The rubbers of Example, Comparative Example and Sorbosein were used in 5mm thickness as inner sole of sports shoes to produce sports shoes. Ten persons who wore the sports shoes and jogged for one hour at 10 °C. They evaluate the feeling of the shoes and the result is shown in Table 2.

6

Table 2

|  | At wearing | 20-30 min | 60 min |
|---|---|---|---|
| Example | Comfortable | Comfortable | Few tired |
| Comparative Example | Comfortable | Slightly hard | Slightly tired |
| Sorboseinve Example | Comfortable | Soft, but slightly tired | Tired on the ankel |

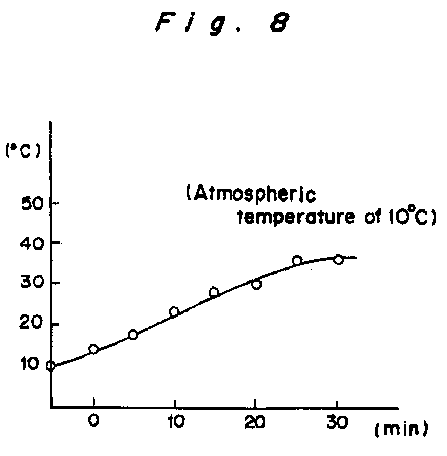

Temperatures inside the shoes which the ten persons wore were measured at an interval of 5 minutes. The result is shown in Fig.8.

Example B

This example explains the first embodiment of the present invention.

The structure of the first embodiment had the following characteristics: hardness 35 (JIS-A type hardness meter), height A 3.5 mm, width B 2.5 mm, distance C 8.0 mm, thickness D 0.5 mm.

Fig.9 shows the relation of compression stress with deformation (distortion) when a weight load is applied to one structure. When the weight load is light, the structure has a low stiffness because of the low hardness of the elastic material and the existence of the ridges 2, so as to deform in adequate amount. When the weight load is heavy, the ridges 2 are bent down to give a high stiffness and the structure deforms to support the heavy weight load. Accordingly, when the structure is employed as the inner sole of sports shoes, it absorbs the impact force on the ground, and the heavy weight load, such as the body weight and the impact force at the time of striking the ground is supported by a small deformation to tightly fix the ankle. The structure therefore functions as a good shock absorbing structure which does not inhibit exercising motions.

The test of Fig.9 is conducted on a rubber disk having a diameter of 50 mm, i.e. an area of 19.63 cm$^2$ which nearly equals the area contacting the ground at the tip toe and the heel. This condition is the same in the tests conducted for Fig.10 concerning with respect to EVA foam, Fig.11 to polyurethane and synthetic rubber foam, Fig.12 to a tree like structure. Figs. 10, 11 and 12 refer to tests conducted on a disk having a thickness of 5.5 mm.

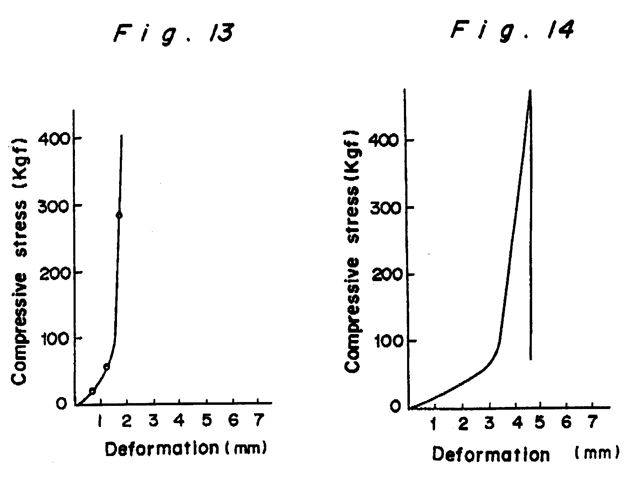

Two sheets of the structure were superposed with each other so that the ridges on the one structure faced in parallel to the other structure's ridges and were subjected to a test for the relation of compression stress and deformation. The result is shown in Fig.13. As is similar to Fig.9, the deformation is large under a light weight load and and small under a heavy weight load. The structure of Fig.13 has a hardness of 25 (JIS-A type hardness meter), a height A of 2.5 mm, a width B of 2.0, a distance C of 7.0 and thickness D of 0.5 mm.

Fig.14 shows that the same test conducted on the superposed structure for Fig.13 further superposed with another superposed structure so that the direction of the ridges of the first layer crosses that of the second layer. The deformation of this multilayer structure at a light weight load is slightly smaller than that of the structure of Fig.13, but shows almost similar characteristics.

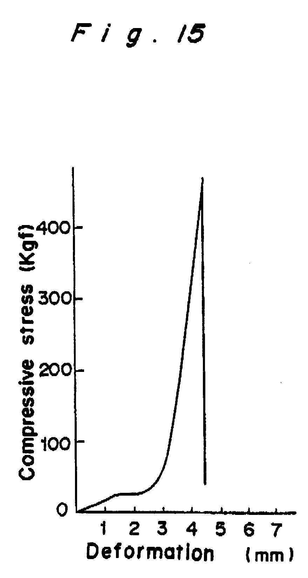

Such multilayer structures as shown in Fig.14 can give different properties. For example, if the superposed structure of Fig.13 is further superposed with another superposed structure so that the direction of the ridges of the first layer is paralleled to that of the second layer, it takes a slightly longer time until all the ridges are bent down and the deformation is elevated at a constant compression stress, as shown in Fig.15.

The following Table 3 shows a comparison of durability between the structure of the present invention and a conventional shock absorbing structure. The structure used in this test was the same as that of Fig.13. In Table 3, the reason why the hardness of the structure of the present invention is not mentioned is that it is difficult to determine an accurate hardness.

7

Table 3

| No. | Test piece | Hardness (JIS-A) | Change in thickness (mm) | | | Appearance after test |
|---|---|---|---|---|---|---|
| | | | Before | After | Charge rate (%) | |
| 1 | The structure of the invention | – | 3.02 | 3.02 | 0.0 | Good |
| 2 | Synthetic rubber foam | 35 | 2.79 | 2.74 | 1.8 | bad |
| 3 | EVA foam | 55 | 2.78 | 2.67 | 3.9 | Very bad |
| 4 | Polyurethane Foam | 40 | 2.82 | 2.76 | 2.1 | Bad |
| 5 | Non-foamed synthetic rubber | 30 | 2.80 | 2.80 | 0.0 | Good |
| 6 | Non-foamed natural rubber | 45 | 2.79 | 2.78 | 0.4 | Good |
| 7 | Non-foamed polyurethane | 50 | 2.80 | 2.80 | 0.0 | Good |
| 8 | Tree-like resin structure | – | 5.51 | 5.09 | 7.6 | Bad |

The test method:

A steel ball of 174 g was dropped 5 times on a test piece from 37 cm height, and change in thickness and appearance after test were evaluated.
Evaluation was made based on the following standard:
Good:     no change in appearance
Bad:      slightly poor in appearance
Very bad: very poor in appearance

Appearance

As shown in Table 3, the structure of the first embodiment of the present invention has no change in thickness and in appearance. It shows good durability against repeated compressions.

Table 4 shows the anisotropy of elastic shear properties of the shock absorbing structure of the present invention.

This test was conducted as follow: The superposed structures of the first embodiment as shown in Fig.2 were placed on the up side and down side of a disk having a diameter of 50 mm, which was incorporated into a compression tester equipped with a circular pressing plate having a diameter of 50 mm. The structure was pulled out sideways at each load of 490.33 N, 980.66 N and 1961.32 N (5 kg f, 10 kg f and 20

8

kg f), for which a shear force was determined to show in Table 4.

**Table 4**

| No. | Hardness[1] and dimension | Direction[2] (Upper/lower) | Thickness (mm) (Upper/lower) | Shear force (kgf/mm) | | |
|---|---|---|---|---|---|---|
| | | | | 490.33 N (5 kgf) load | 980.66 N (10 kgf) load | 1961.32 N (20 kgf) load |
| 1 | Hardness 25 A=2.5 mm, B=2.0 mm C=7.0 mm, D=0.5 mm | Cross/Cross | 3.9/3.9 | 4.0 | 4.5 | 6.8 |
| | | Parallel/Cross | 3.9/3.9 | 4.8 | 6.0 | 8.0 |
| | | Parallel/Parallel | 3.9/3.9 | 8.0 | 9.5 | 12.0 |
| 1 | Hardness 35 A=2.5 mm, B=2.0 mm C=7.0 mm, D=0.5 mm | Cross/Cross | 3.9/3.9 | 5.2 | 6.0 | 7.3 |
| | | Parallel/Cross | 3.9/3.9 | 6.5 | 9.0 | 12.0 |
| | | Parallel/Parallel | 3.9/3.9 | 11.0 | 13.0 | 15.0 |

1 JIS-A type hardness meter.

2 This direction shows the direction of the ridges in the structure and the direction pulling out the disk. Cross shows that the direction of the ridges is crossed to the direction of pulling out. Parallel shows that the direction of the ridges is paralleled to the direction of pulling out.

As is apparent from Table 4, shear forces can be varied by the hardness of the elastic material, and by the direction of the ridges of the structure. The shear forces can also be varied by the height A, width B, distance C and base thickness D, although this is not shown in Table 4.

In the present invention, the ridges 2 are not always formed continuously in the same direction, and may be formed intermittently. Also, the ridges 2 may have a round top or may taper off to the top. Alternatively, they can be larger in width as they get toward the top.

The shock absorbing structure of the present invention can be typically employed as an inner sole of shoes. The term "inner sole" includes both that it is incorporated into the inside of a sole and that it is placed on a sole. The former is commonly done. The structure of the present invention can be used in various forms to exhibit various properties, whereby it is applicable as an inner sole for many applications, such as shoes in daily life, sports shoes for jogging, tennis, golf etc. and shoes for medical usages.

One shock absorbing structure of the present invention may be incorporated as an inner sole into the tip toe of a shoe in which the direction of the ridges 2 is the right and left direction of the body. The shoes can firmly fix the ankle in the right and left direction and have excellent shock absorbing properties against back and forth direction force which usually occurs in walking or exercising. In order to fit specific sports, the direction of the ridges can be varied.

Two sheets of the superposed structures of the present invention may be further superposed with each other as facing the ridges to form one layer and two such layers may be used as an innersole.

If much multilayer structure is applied to shoes for medical usages, such as for rehabilitation, it makes possible a rehabilitation without excess weight load on the legs because of scattering such load on the legs and of effectively reducing impact force in walking.

The structure of the present invention may also be suitable for mattresses for beds. In this case, the multilayer structure mentioned above is preferred, in which the ridges are arranged in a right and left direction of the body. This construction effectively prevents bedsores.

The structure of the present invention can be used for a cushioning the sheet of a chair. In this case, the structure can be the superposed one or the non-superposed one.

Example C

This Example illustrates the second embodiment of the present invention.

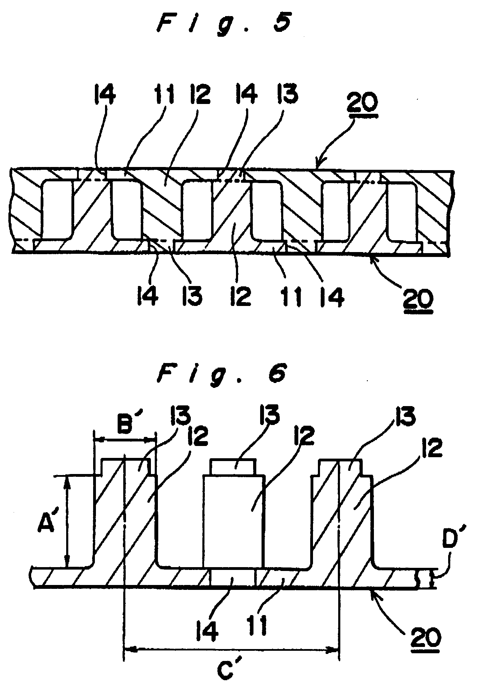

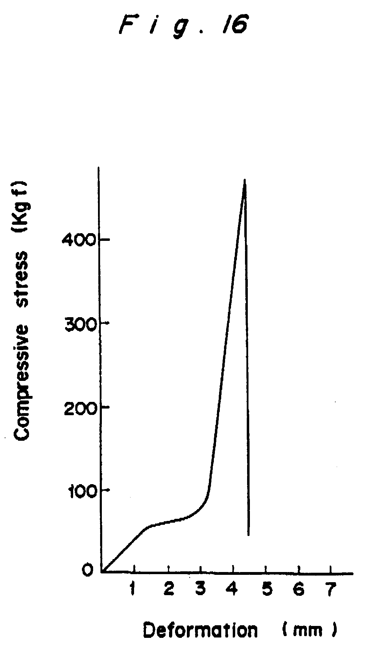

Fig.16 shows a relation of compression stress and deformation (distortion) when a load is applied to the structure having column projections 12 as shown in Fig.4. The structure has a hardness of 35 (JIS-A type hardness meter) and, making reference to Fig.6, a thickness D of 0.5 mm, a height of A' of 3 mm, a diameter B' of 15 mm and a distance C' of 4 mm. A test piece has a disk shape having a diameter of 50 mm, of which area is 19.63 $cm^2$ which nearly equals the area contacting the ground at the tip toe and heel. As is shown in Fig.7, the compression stress slowly increases until a deformation is 3 mm, but it rapidly increases over 3 mm. When the weight load is light, the structure is low in stiffness because of the low hardness of the elastic material and the existence of the projections 12, which deform in adequate amount. When the weight load is heavy, the projections 12 are bent down to show a high stiffness and the structure deforms slightly to support the heavy weight load. Accordingly, when the structure is employed as an inner sole of sports shoes, it absorbs impact force on the ground, and the heavy weight load, such as the body weight and the impact force at the time of striking the ground is supported by a small deformation to tightly fix the ankle. The structure therefore functions as a good shock absorbing structure which does not inhibit exercising motions.

Table 5 shows the anisotropy of elastic shear properties of the shock absorbing structure of the present invention.

This test was conducted as follow: The superposed structures of the second embodiment as shown in Fig.5 were placed on the up side and down side of a disk having a diameter of 50 mm, which was incorporated into a compression tester equipped with a circular pressing plate having a diameter of 50 mm. The structure was pulled out sideways at each load of 490.33 N, 980.66 N and 1961.32 N (5 kg f, 10 kg f and 20 kg f), for which a shear force was determined to show in Table 4.

Table 5

| No. | Hardness[1] and dimension | Direction[2] (Upper/lower) | Thickness (mm) (Upper/lower) | Shear force (kgf/mm) | | |
|-----|---------------------------|----------------------------|------------------------------|---------------------|---|---|
| | | | | 49.03 N (5 kgf) load | 98.06 N (10 kgf) load | 196.1 N (20 kgf) load |
| 1 | Hardness 25 A'=3.0mm, B'=1.5mm C'=4.0mm, D'=0.5mm | X direction | 3.5/3.5 | 4.5 | 5.5 | 6.9 |
| | | Y direction | 3.5/3.5 | 4.4 | 5.6 | 7.0 |

1  JIS-A type hardness meter.

2  This direction shows the direction of pulling out the disk. X direction and Y direction is a right angle.

As is apparent from Table 4, the shear forces are the same in the X direction and in the Y direction.

The shock absorbing structure of the present invention can be typically employed as the inner sole of shoes. The term "inner sole" includes both that it is incorporated into the inside of a sole and that it is placed on a sole. The former is commonly done. The structure of the present invention can be used in various forms to exhibit various properties, whereby it is applicable as an inner sole to many applications, such as shoes in daily life, sports shoes for jogging, tennis, golf etc. and shoes for medical usages.

[Technical Effect of the Invention]

According to an embodiment of the present invention, the height of the projections spaced apart in parallel is greater than the thickness of the projections, which are bent down at a light weight load to absorb impact force. At a heavy weight load, they are completely bent down to act as if it was a solid rubber-like elastic material which supports the heavy weight load with a small deformation. This can firmly fix the ankle and prevent the twist of it. The structure has the protrusions 3 and 13 on the ridges and the projections and the hollows 4 and 14 joining the protrusions 3 and 13 to the base 1 and 11. Two structures are superposed on each other so that the ridges or the projections face and alternately engaged each other. The structure of the present invention is very light and has good durability. The structure indicats excellent shock absorbing properties in all directions and also effectively produces reaction force. The structure of the present invention is very suitable as a shock absorbing material for shoes.

**Claims**

1. A shock absorbing structure made of an elastic material consisting of a rubber composition comprising a rubber component and additives and being composed of a base (1,11) and a plurality of projections (2,12) spaced apart on said base (1,11),
   characterized in that
   the elastic material has a hardness in a range of 5 to 60 according to JIS-A type hardness meter,
   the plurality of projections (2,12) are spaced apart in parallel on said base (1,11),
   the distance (C,C') between the centres of a row of projections (2,12) and an adjacent row of projections is larger than twice the thickness (B,B') of the projections (2,12),
   the projections (2,12) have at least one protrusion (3,13) thereon which is smaller in plane area than that of the upper surface of the projections (2,12),
   the base (1,11) has hollows (4,14) having substantially the same shape and the same spacing as the protrusions (3,13), the height of the protrusions (3,13) is substantially the same as the thickness of said base (1,12),
   the hollows (4,14) are spaced apart in the same intervals as the protrusions and each of the hollows (4,14) is located between two adjacent projections (2,12).

2. A shock absorbing structure as claimed in claim 1 wherein the height of the projections (2,12) is greater than the thickness (B,B') of the projections (2,12).

3. A shock absorbing structure as claimed in claim 1 or claim 2 wherein the projections (2,12) are in the form of columns with a height at least 1.5 times more than their diameters.

4. A shock absorbing structure as claimed in claim 1 or claim 2 wherein the projections (2,12) are in the form of ridges.

5. A shock absorbing structure as claimed in any one of claims 1 to 4 which is employed as the inner sole of a shoe.

**Patentansprüche**

1. Schockdämpfende Struktur, hergestellt aus einem elastischen Material bestehend aus einer Gummizusammensetzung mit einem Gummianteil und Zusätzen, und der aus einer Basis (1, 11) und mehreren auf der Basis (1, 11) beabstandeten Vorsprüngen (2, 12),
   dadurch gekennzeichnet, daß
   das elastische Material eine Härte in einem Bereich von 5 bis 60 entsprechend einer JIS-A-Typ Härtemeßeinrichtung aufweist,
   die mehrere Vorsprünge (2, 12) auf der Basis (1, 11) parallel beabstandet sind,
   der Abstand (C, C') zwischen den Mitten einer Reihe von Vorsprüngen (2, 12) und einer benachbarten Reihe von Vorsprüngen größer als zweimal die Dicke (B, B') der Vorsprünge (2, 12),
   die Vorsprünge (2, 12) mindestens einen vorstehenden Abschnitt (3, 13) darauf haben, der in der Oberfläche kleiner als die obere Fläche der Vorsprünge (2, 12) ist, die Basis (1, 11) Löcher (4, 14) hat, die im wesentlichen die gleiche Form und den gleichen Abstand wie die vorstehenden Abschnitte (3, 13) aufweisen, wobei die Höhe der vorstehenden Abschnitte (3, 13) im wesentlichen gleich der Dicke der Basis (1, 12) ist,

die Löcher (4, 14) in den gleichen Abständen wie die vorstehenden Abschnitte beabstandet sind und jedes der Löcher (4, 14) Zwischen Zwei benachbarten Vorsprüngen (2, 12) angeordnet ist.

2. Schockdämpfende Struktur nach Anspruch 1, wobei die Höhe der Vorsprünge (2, 12) größer als die Dicke (B, B') der Vorsprünge (2, 12) ist.

3. Schockdämpfende Struktur nach Anspruch 1 oder Anspruch 2, wobei die Vorsprünge (2, 12) in der Form von Pfosten mit einer Höhe von mindestens 1,5 mal mehr als deren Durchmesser vorliegen.

4. Schockdämpfende Struktur nach Anspruch 1 oder Anspruch 2, wobei die Vorsprünge (2, 12) in der Form von Rippen vorliegen.

5. Schockdämpfende Struktur nach einem der Ansprüche 1 bis 4, die als die Innensohle eines Schuhs eingesetzt wird.

**Revendications**

1. Structure d'amortissement de chocs formée d'un matériau élastique constitué d'une composition de caoutchouc contenant un élément constituant de caoutchouc et des adjuvants et composée d'une base (1, 11) et de plusieurs saillies (2, 12) espacées sur la base (1, 11),

caractérisée en ce que :

le matériau élastique a une dureté comprise entre 5 et 60 mesurée par un appareil de mesure de dureté de type JIS-A,

les saillies (2, 12) sont espacées parallèlement sur la base (1, 11),

la distance (C, C') comprise entre les centres d'une ligne de saillies (2, 12) et d'une ligne adjacente de saillies est supérieure au double de l'épaisseur (B, B') des saillies (2, 12),

les saillies (2, 12) ont au moins un ergot (3, 13) qui a une surface plane inférieure à celle de la surface supérieure des saillies (2, 12),

la base (1, 11) a des creux (4, 14) ayant pratiquement la même forme et le même espacement que les ergots (3, 13), et la hauteur des ergots (3, 13) est pratiquement la même que l'épaisseur de la base (1, 12), et

les creux (4, 14) sont espacés avec les mêmes intervalles que les ergots et chacun des creux (4, 14) est placé entre deux saillies adjacentes (2, 12).

2. Structure d'amortissement de chocs selon la revendication 1, dans laquelle la hauteur des saillies (2, 12) est supérieure à l'épaisseur (B, B') des saillies (2, 12).

3. Structure d'amortissement de chocs selon la revendication 1 ou 2, dans laquelle les saillies (2, 12) sont sous forme de colonnes dont la hauteur est au moins supérieure à 1,5 fois le diamètre.

4. Structure d'amortissement de chocs selon la revendication 1 ou 2, dans laquelle les saillies (2, 12) sont sous forme de nervures.

5. Structure d'amortissement de chocs selon l'une quelconque des revendications 1 à 4, qui est utilisée comme semelle interne d'une chaussure.

# Fig. 1

Fig. 2

Fig. 3

# Fig. 4

Fig. 5

Fig. 6

Fig. 7

# Fig. 8

Fig. 9

Fig. 10

Fig. 12

Tree-like structure

Compressive stress (Kgf)

400    300    200    100    0

Deformation (mm)

1 2 3 4 5 6 7

Fig. 11

Polyurethane foam {
—o— (High stiffness)
—•— (Low stiffness)
}

Synthetic rubber foam {
—o— (High stiffness)
—•— (Low stiffness)
}

Compressive stress (Kgf)

400    300    200    100    0

Deformation (mm)

1 2 3 4 5 6 7

21

EP 0 434 834 B1

*F i g . 13*

*F i g . 14*

22

# F i g . 15

# F i g . 16